Europäisches Patentamt

European Patent Office

Office européen des brevets

(19)

(11) **EP 1 429 284 A2**

(12) **EUROPEAN PATENT APPLICATION**

(43) Date of publication:
**16.06.2004 Bulletin 2004/25**

(51) Int Cl.$^7$: **G06N 1/00**

(21) Application number: **03425749.3**

(22) Date of filing: **21.11.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **13.12.2002 IT VA20020069**

(71) Applicant: **STMicroelectronics S.r.l.**
**20041 Agrate Brianza (Milano) (IT)**

(72) Inventors:
• **Calabro', Antonino**
  **89018 Villa San Giovanni (IT)**
• **Porto, Domenico**
  **95123 Catania (IT)**

(74) Representative: **Pellegri, Alberto et al**
**c/o Società Italiana Brevetti S.p.A.**
**Piazza Repubblica, 5**
**21100 Varese (IT)**

(54) **Method of performing a simon's or a shor's quantom algorithm and relative quantum gate**

(57)     A method for performing a Simon's or Shor's quantum algorithm over a certain function $f(x)$ encoded with a certain number $n$ of qubits, comprises

•   performing a superposition operation over a set of input vectors, generating a superposition vector,
•   performing an entanglement operation, generating a corresponding entanglement vector,
•   performing an interference operation, generating a corresponding output vector.

This method carries out the superposition operation in a comparably fast manner because it contemplates the operation of generating the superposition vector by identifying only the non null component thereof and by calculating, in function of the number $n$ of qubits, the value $1/2^{n/2}$ of all the non null components of the superposition vector, and by calculating indices of these components according to an arithmetical succession, the seed of which is 1 and the common difference is $2^n$.

This method is implemented in a relative quantum gate.

FIG. 6

EP 1 429 284 A2

**Description**

FIELD OF THE INVENTION

The present invention relates in general to quantum algorithms and more in particular to a method and a relative quantum gate for performing very fast Simon's and Shor's algorithms, without the need of storing very large matrices.

BACKGROUND OF THE INVENTION

Quantum algorithms are global random searching algorithms based on the principles, laws, and quantum effects of quantum mechanics. They are used for controlling a process or for processing data in a database. They are particularly useful in performing intelligent processes of search-of-minima intelligent operations.

In quantum search operations, each design variable is represented by a finite linear superposition of classical initial states. Through a sequence of elementary unitary steps the initial quantum state $|i\rangle$ (for the input) is manipulated in such a way that a measurement of the final state of the system yields the correct output. Usually, in the quantum search algorithm three principal operators are used, namely: *linear superposition (coherent states), entanglement*, and *interference*.

For a better comprehension of the field of application of the invention, a brief description of quantum search algorithms is provided.

A SURVEY OF QUANTUM ALGORITHMS

The problems solved by the quantum algorithms may be stated as follows:

| Input | A function $f:\{0,1\}^n \rightarrow \{0,1\}^m$ |
|---|---|
| Problem | Find a certain property of $f$ |

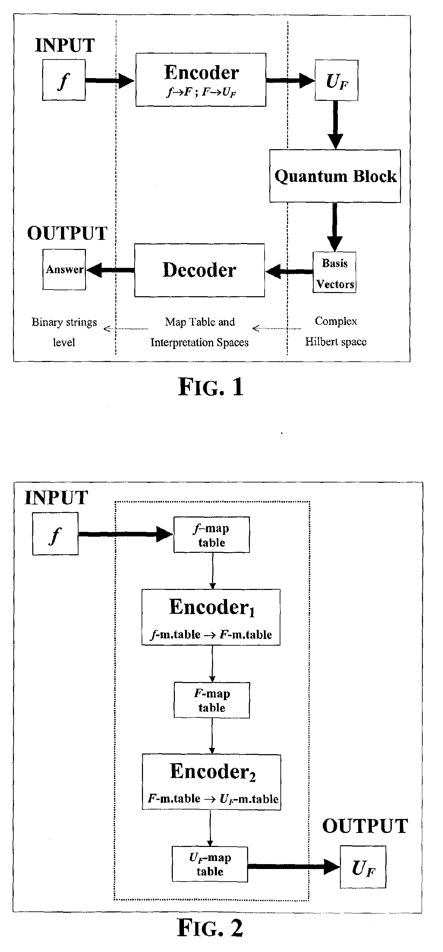

The structure of a quantum algorithm is outlined, in a high level representation, by the diagram of Figure 1.

The input of a quantum algorithm is always a function $f$ of a binary string into a binary string. This function is represented as a map table, defining for each string its image. The function $f$ is firstly encoded into a unitary matrix operator $U_F$ depending on the $f$ properties. In a way, this operator calculates $f$ when its input and output strings are encoded into canonical base vectors of a complex Hilbert space: $U_F$ maps the vector code of every string into the vector code of its image by $f$.

---

BOX 1: UNITARY MATRIX $U_F$

A squared matrix $U_F$ on the complex field is *unitary* if its inverse matrix coincides with its conjugate transpose:

$$U_F^{-1} = U_F{}^\dagger$$

A unitary matrix is always reversible and preserves the norm of vectors.

---

Once the matrix operator $U_F$ has been generated, it is embedded into a quantum gate $G$; a unitary matrix whose structure depends on the form of the matrix $U_F$ and on the problem to be solved. The quantum gate is the core of a quantum algorithm. In every quantum algorithm, the quantum gate acts on the initial canonical base of vectors (a same vector may be always chosen) to generate a complex linear combination (superposition) of base vectors as output. This superposition contains all the information to answer to the initial problem.

After having made such a superposition, a measurement is done in order to extract this information. In quantum mechanics, a measurement is a non-deterministic operation that produces as output only one of the base vectors of the operation of superposition. The probability of each base vector of being the output of the measurement depends on its complex coefficient (probability amplitude) of entering in said complex linear combination.

Each single operation of the quantum gate and the measurement constitute the so-called quantum block. The quantum block is repeated *k* times in order to produce a collection of k base vectors. Being measurement a non-deterministic operation, these basic vectors will not necessarily be identical and each one of them encodes a piece of the information needed to solve the problem.

The last part of the algorithm consists in the interpretation of the collected base vectors in order to get with a certain probability the right answer to the initial problem.

**Encoder**

The behavior of the encoder block is described in the detailed schematic diagram of Figure 2.

Function *f* is encoded into matrix $U_F$ in three steps.

*Step 1*

The map table of function $f:\{0,1\}^n\rightarrow\{0,1\}^m$ is transformed into the map table of the injective function $F$: $\{0,1\}^{n+m}\rightarrow\{0,1\}^{n+m}$ such that:

$$F(x_0, ..., x_{n-1}, y_0, ..., y_{m-1})= (x_0, ..., x_{n-1}, f(x_0, ..., x_{n-1})\oplus(y_0, ..., y_{m-1})) \tag{1}$$

---

### BOX 2: XOR OPERATOR $\oplus$

The XOR operator between two binary strings $p$ and $q$ of length $m$ is a string $s$ of length $m$ such that the $i$-th digit of $s$ is calculated as the exclusive OR between the $i$-th digits of $p$ and $q$:

$$p=(p_0, .., p_{n-1})$$
$$q=(q_0, .., q_{n-1})$$
$$s = p \oplus q = ((p_0+q_0) \bmod 2, .., (p_{n-1}+q_{n-1}) \bmod 2))$$

---

The need to deal with an injective function comes from the requirement that $U_F$ be unitary. A unitary operator is reversible, so it cannot map two different inputs to the same output. Given that $U_F$ is the matrix representation of $F$, $F$ must be injective. Should the matrix representation of function $f$ be used, a non-unitary matrix may result, since $f$ could be non-injective. Therefore, injectivity is assured by increasing the number of bits and by considering the function $F$ instead of the function $f$. Anyway, function $f$ can always be calculated from $F$ by putting $(y_0, ..., y_{m-1})=(0, ...,0)$ in the input string and reading the last $m$ values of the output string.

*Step 2*

The map table of function $F$ is transformed into $U_F$ map table, according to the following formula:

$$\forall s\in\{0,1\}^{n+m}: U_F[\tau(s)]= \tau[F(s)] \tag{2}$$

The coding map $\tau:\{0,1\}^{n+m} \to \mathbf{C}^{2n+m}$ ($\mathbf{C}^{2n+m}$ is the target complex Hilbert space) is such that:

$$\tau(0) = \begin{pmatrix} 1 \\ 0 \end{pmatrix} = |0\rangle \quad \tau(1) = \begin{pmatrix} 0 \\ 1 \end{pmatrix} = |1\rangle \qquad (3)$$

$$\tau(x_0,..,x_{n+m-1}) = \tau(x_0) \otimes .. \otimes \tau(x_{n+m-1}) = |x_0..x_{n+m-1}\rangle$$

---

### BOX 3: VECTOR TENSOR PRODUCT $\otimes$

The tensor product between two vectors of dimensions $h$ and $k$ is a tensor product of dimension $h \cdot k$, such that:

$$|x\rangle \otimes |y\rangle = \begin{pmatrix} x_1 \\ ... \\ x_h \end{pmatrix} \otimes \begin{pmatrix} y_1 \\ ... \\ y_k \end{pmatrix} = \begin{pmatrix} x_1 y_1 \\ ... \\ x_1 y_k \\ ... \\ x_h y_1 \\ ... \\ x_h y_k \end{pmatrix} \Longrightarrow$$

**Physical interpretation:**

*If a component of a complex vector is interpreted as the probability amplitude of a system of being in a given state (indexed by the component number), the tensor product between two vectors describes the joint probability amplitude of two systems of being in a joint state.*

---

### Examples: Vector Tensor Products

$$(0,0) \xrightarrow{\tau} \begin{pmatrix} 1 \\ 0 \end{pmatrix} \otimes \begin{pmatrix} 1 \\ 0 \end{pmatrix} = \begin{pmatrix} 1 \\ 0 \\ 0 \\ 0 \end{pmatrix} = |00\rangle \qquad (0,1) \xrightarrow{\tau} \begin{pmatrix} 1 \\ 0 \end{pmatrix} \otimes \begin{pmatrix} 0 \\ 1 \end{pmatrix} = \begin{pmatrix} 0 \\ 1 \\ 0 \\ 0 \end{pmatrix} = |01\rangle$$

$$(1,0) \xrightarrow{\tau} \begin{pmatrix} 0 \\ 1 \end{pmatrix} \otimes \begin{pmatrix} 1 \\ 0 \end{pmatrix} = \begin{pmatrix} 0 \\ 0 \\ 1 \\ 0 \end{pmatrix} = |10\rangle \qquad (1,1) \xrightarrow{\tau} \begin{pmatrix} 0 \\ 1 \end{pmatrix} \otimes \begin{pmatrix} 0 \\ 1 \end{pmatrix} = \begin{pmatrix} 0 \\ 0 \\ 0 \\ 1 \end{pmatrix} = |11\rangle$$

Code $\tau$ maps bit values into complex vectors of dimension 2 belonging to the canonical base of $\mathbf{C}^2$. Moreover, using tensor product, $\tau$ maps the general state of a binary string of dimension $n$ into a vector of dimension $2^n$, reducing this state to the joint state of the *n* bits composing the register. Every bit state is transformed into the corresponding 2-dimension base vector and then the string state is mapped into the corresponding $2^n$-dimension base vector by composing all bit-vectors through tensor product. In this sense, tensor product is the vector counterpart of state conjunction.

Base vectors are denoted using the *ket* notation |*i*>. This notation is taken from Dirac's description of quantum mechanics.

*Step 3*

The map table of $U_F$ is transformed into the matrix $U_F$ by using the following transformation rule:

$$[U_F]_{ij} = 1 \Leftrightarrow U_F|j\rangle = |i\rangle \qquad (4)$$

which can be easily understood by considering the vectors |*i*> and |*j*> as column vectors. Because these vectors belong to the canonical base, $U_F$ defines a <u>permutation map</u> of the rows of the <u>identity matrix</u>. In general, row |*j*> is mapped into row |*i*>.

This rule will be illustrated more in detail in a sample quantum algorithm, namely the Shor's algorithm.

**Quantum block**

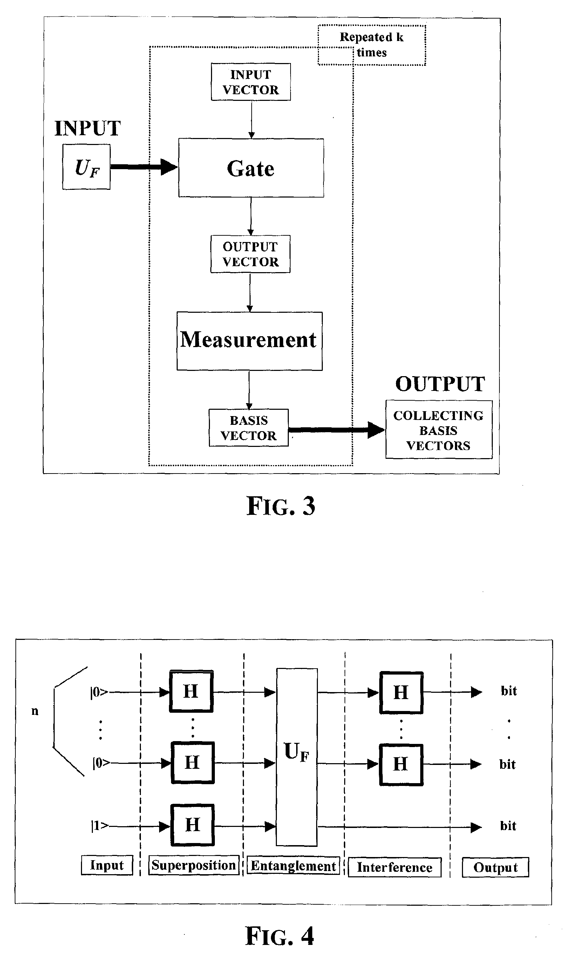

The core of the quantum block is the <u>quantum gate</u>, which depends on the properties of the matrix $U_F$. The scheme of Figure 3 gives a more detailed description of the quantum block.

In Figure 3, the matrix operator $U_F$ is the output of the encoder block represented in Figure 2. Here, it becomes the input for the quantum block.

This matrix operator is firstly embedded into a more complex gate: the quantum gate *G*. Unitary matrix *G* is applied *k* times to an initial canonical base vector |*i*> of dimension $2^{n+m}$. Every time, the resulting complex superposition *G*|0..01..1> of base vectors is measured, producing as result one base vector |$x_i$>. All the measured base vectors {|$x_1$>,..,|$x_k$>} are collected together. This collection is the output of the quantum block.

The "intelligence" of such algorithms rests in the ability to build a quantum gate that is able to extract the information necessary to find the required property off and to store it into the output vector collection.

The structure of the quantum gate for every quantum algorithm will be discussed in detail, observing that a general description is possible.

In order to represent quantum gates some special diagrams called <u>quantum circuits</u> will be employed.

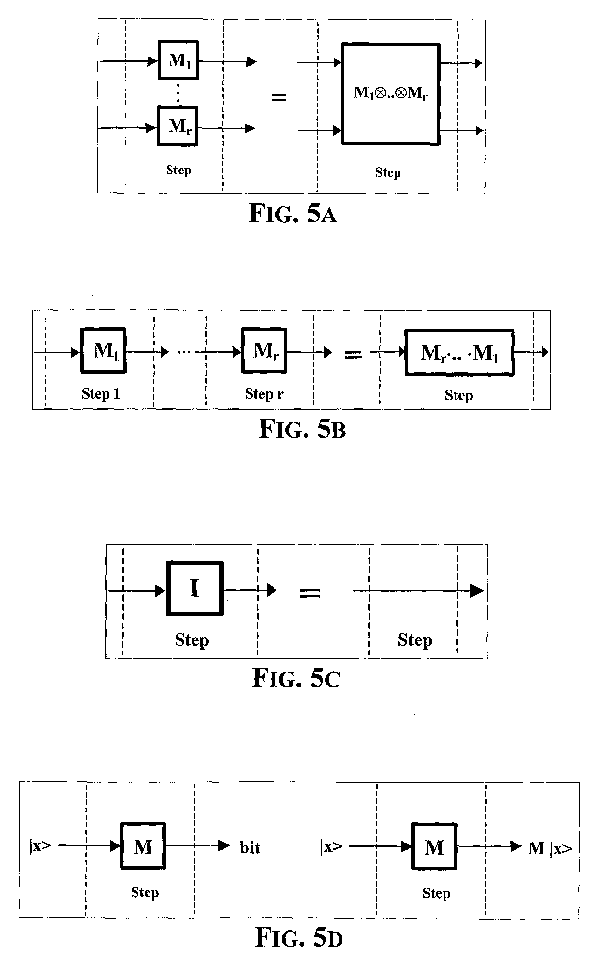

An example of quantum circuit, relative to the so called Deutsch-Jozsa's quantum algorithm, is reported in Figure 4. Every rectangle is associated to a matrix $2^n \times 2^n$, where *n* is the number of lines entering and leaving the rectangle. For example, the rectangle marked $U_F$ is associated to the matrix $U_F$. Typically, matrix *H* represents a Hadamard rotation

$$H = \frac{1}{\sqrt{2}} \begin{bmatrix} 1 & 1 \\ 1 & -1 \end{bmatrix} \qquad (5)$$

Quantum circuits provide a high-level description of the gate and, by using some transformation rules that are listed in Figures from 5a to 5f, it is possible to compile them into the corresponding gate-matrix.

BOX 4: MATRIX TENSOR PRODUCT ⊗

The tensor product between two matrices $X_{n \times m}$ and $Y_{h \times k}$ is a (block) matrix $(n \cdot h) \times (m \cdot k)$ such that:

$$X \otimes Y = \begin{bmatrix} x_{11}Y & .. & x_{1m}Y \\ .. & .. & .. \\ x_{n1}Y & .. & x_{nm}Y \end{bmatrix} \quad with \quad X = \begin{bmatrix} x_{11} & .. & x_{1m} \\ .. & .. & .. \\ x_{n1} & .. & x_{nm} \end{bmatrix}$$

**Example: Matrix Tensor Product**

$$\begin{bmatrix} 1 & 2 \\ 3 & 4 \end{bmatrix} \otimes \begin{bmatrix} 5 & 6 \\ 7 & 8 \end{bmatrix} = \begin{bmatrix} 1 \cdot \begin{bmatrix} 5 & 6 \\ 7 & 8 \end{bmatrix} & 2 \cdot \begin{bmatrix} 5 & 6 \\ 7 & 8 \end{bmatrix} \\ 3 \cdot \begin{bmatrix} 5 & 6 \\ 7 & 8 \end{bmatrix} & 4 \cdot \begin{bmatrix} 5 & 6 \\ 7 & 8 \end{bmatrix} \end{bmatrix} = \begin{bmatrix} 5 & 6 & 10 & 12 \\ 7 & 8 & 14 & 16 \\ 15 & 18 & 20 & 24 \\ 21 & 24 & 28 & 32 \end{bmatrix}$$

The manner of using these rules will become clearer when a first sample of quantum algorithm will be illustrated.

**Decoder**

The decoder block has the function of interpreting the base vectors collected after the iterated execution of the quantum block. Decoding these vectors means to retranslate them back into binary strings and interpreting them directly if they already contain the answer to the starting problem or using them, for instance as coefficients vectors for some system of equations, in order to get the sought solution. This part will not be treated in detail because it is a relatively easy classical part of no particular interest.

In order to better illustrate a field of application of this invention, a brief description of the Shor's algorithm is given.

**SHOR'S ALGORITHM**

Shor's problem is so stated:

*Given an integer number N, find a factor p for N*

This problem seems to be different from the other problems solved by quantum algorithms, but it can be reduced to an equivalent problem with the same form as the other quantum problems. This reduction is made possible by a result of the theory of numbers that relates the period r of a special periodic function to the factors of an integer *N*. This function is:

$$f_{N,a} : \aleph \to \aleph \; such \; that \; f_{N,a}(x) = a^x \bmod N$$

where $a$ is a random number coprime to $N$, namely:

$$gcd(a, N) = 1$$

where $gcd(x, y)$ is the greatest common divisor between $x$ and $y$.

This function is periodical (the period is at most $N$). Let the period be $r$. Then:

$$f_{N,a}(0) = f_{N,a}(r) \qquad a^r \equiv 1 \bmod N$$

If the period is even, this equation can be rewritten as:

$$\left(a^{r/2}\right)^2 \equiv 1 \bmod N \Leftrightarrow \left(a^{r/2}\right)^2 - 1 \equiv 0 \bmod N \Leftrightarrow \left(a^{r/2} - 1\right)\left(a^{r/2} + 1\right) \equiv 0 \bmod N$$

This means:

$$\exists h \in \aleph : \left(a^{r/2} - 1\right)\left(a^{r/2} + 1\right) = hN$$

So, unless $(a^{r/2}-1) \equiv 0 \bmod N$ or $(a^{r/2}+1) \equiv 0 \bmod N$, namely $a^{r/2} \equiv \pm 1 \bmod N$, at least one of $a^{r/2}+1$ or $a^{r/2}-1$ must have a non-trivial factor in common with $N$. It may be found by calculation:

$$gcd(a^{r/2} - 1, N) \qquad gcd(a^{r/2} + 1, N)$$

Using this reduction, the true question becomes: "What is the period of $f$?" Since the period of this function is less than $N$, it may be restricted to the interval [0, 1, ..., $N$-1]. Every input value is coded as a binary string. A number of bits $n = [\log N]$ (eventually $[\log N]+1$) is needed to code all the $N$ possible input values.

Therefore, Shor's problem is translated into the following standard quantum problem:

| Input | $f : \{0,1\}^n \to \{0,1\}^n$ with period $r$ |
|---|---|
| **Problem** | Find $r$ |

**Encoder**

First a simple example will be dealt with, then conclusions will be generalized.

*A. Introductory example*

Consider the case:

$$N = 4 \Rightarrow n = 2; \qquad a = 3$$

Then, f map table is:

Table 1

| $(x_0, x_1)$ | $f(x_0, x_1)$ |
|---|---|
| 00 | 01 |
| 01 | 11 |
| 10 | 01 |
| 11 | 11 |

The period of this function is r=2.

*Step 1*

Function *f* is encoded into the injective function *F* built using eq. (2). Therefore, the map table of *F* is as follows:

Table 2

| $(x_0, .., x_{n-1}, y_0, .., y_{n-1})$ | $F(x_0, .., x_{n-1}, y_0, .., y_{n-1})$ |
|---|---|
| 0000 | 0001 |
| 0100 | 0111 |
| 1000 | 1001 |
| 1100 | 1111 |
| 0001 | 0000 |
| 0101 | 0110 |
| 1001 | 1000 |
| 1101 | 1110 |
| 0010 | 0011 |
| 0110 | 0101 |
| 1010 | 1011 |
| 1110 | 1101 |
| 0011 | 0010 |
| 0111 | 0100 |
| 1011 | 1010 |
| 1111 | 1100 |

*Step 2*

The function *F* is encoded into the map table of the operator $U_F$ :

Table 3

| $|x_0..x_{n-1}y_0..y_{n-1}>$ | $U_F|x_0..x_{n-1}y_0..y_{n-1}>$ |
|---|---|
| \|0000> | \|0001> |
| \|0100> | \|0111> |
| \|1000> | \|1001> |
| \|1100> | \|1111> |
| \|0001> | \|0000> |
| \|0101> | \|0110> |

Table 3 (continued)

| $\lvert x_0 .. x_{n-1} y_0 .. y_{n-1} \rangle$ | $U_F \lvert x_0 .. x_{n-1} y_0 .. y_{n-1} \rangle$ |
|---|---|
| \|1001> | \|1000> |
| \|1101> | \|1110> |
| \|0010> | \|0011> |
| \|0110> | \|0101> |
| \|1010> | \|1011> |
| \|1110> | \|1101> |
| \|0011> | \|0010> |
| \|0111> | \|0100> |
| \|1011> | \|1010> |
| \|1111> | \|1100> |

*Step 3*

The matrix corresponding to $U_F$ is obtained by using the rule:

$$[U_F]_{ij} = 1 \Leftrightarrow U_F \lvert j \rangle = \lvert i \rangle$$

or in other words by observing that the first two vectors in the input tensor product are left unchanged, whereas the operator acting on the last two is chosen inside the set $\{I \otimes I, I \otimes C, C \otimes I, C \otimes C\}$ wherein $I$ is the identity matrix and $C$ is the complement matrix, depending on the values of the first two vectors:

Table 4

| $U_F$ | \|00> | \|01> | \|10> | \|11> |
|---|---|---|---|---|
| \|00> | $I \otimes C$ | 0 | 0 | 0 |
| \|01> | 0 | $C \otimes C$ | 0 | 0 |
| \|10> | 0 | 0 | $I \otimes C$ | 0 |
| \|11> | 0 | 0 | 0 | $C \otimes C$ |

This matrix preserves the first two vectors and:

- it preserves the third vector, flipping the fourth vector when the second vector is \|0>;

- it flips the third and fourth vectors, when the second vector is \|1>.

It is worth noticing that the block matrix in cell $(i, i)$ is identical to the block matrix in cell $((i+r) \bmod N, (i+r) \bmod N)$ where $i$ is the binary label of the vector marking the matrix row and column of the cell.

*B. Case with n=2*

In general, if $n=2$, takes a different value for $a$ and so a different period $r$, the operator still maps the first $n$ vectors into themselves, but the block matrix pattern on the main diagonal changes.
The matrix $U_F$ has the following form:

Table 5

| $U_F$ | \|00> | \|01> | \|10> | \|11> |
|---|---|---|---|---|
| \|00> | $M_{00}$ | 0 | 0 | 0 |
| \|01> | 0 | $M_{01}$ | 0 | 0 |

Table 5  (continued)

| $U_F$ | \|00> | \|01> | \|10> | \|11> |
|-------|-------|-------|-------|-------|
| \|10> | 0 | 0 | $M_{10}$ | 0 |
| \|11> | 0 | 0 | 0 | $M_{11}$ |

where $M_i \in \{I \otimes I, I \otimes C, C \otimes I, C \otimes C\}$ and $M_i = M_j \Leftrightarrow ((j=i)$ OR $(j=(i+r) \bmod N))$.

## C. General case

Through a similar reasoning the following general form for the matrix $U_F$ when $n>0$ may be proposed:

Table 6

| $U_F$ | \|0..0> | \|0..1> | ... | \|1..1> |
|-------|---------|---------|-----|---------|
| \|0..0> | $M_{0..0}$ | 0 | ... | 0 |
| \|0..1> | 0 | $M_{0..1}$ | ... | 0 |
| ... | ... | ... | ... | ... |
| \|1..1> | 0 | 0 | 0 | $M_{1..1}$ |

where $M_i = P_1 \otimes .. \otimes P_n$ , $P_k \in \{I, C\}$, $k=1,..,n$ and $M_i = M_j \Leftrightarrow ((j=i)$OR$(j=(i+r)\bmod N))$..
The column labels are base vectors of dimension $n$.

## Quantum Block

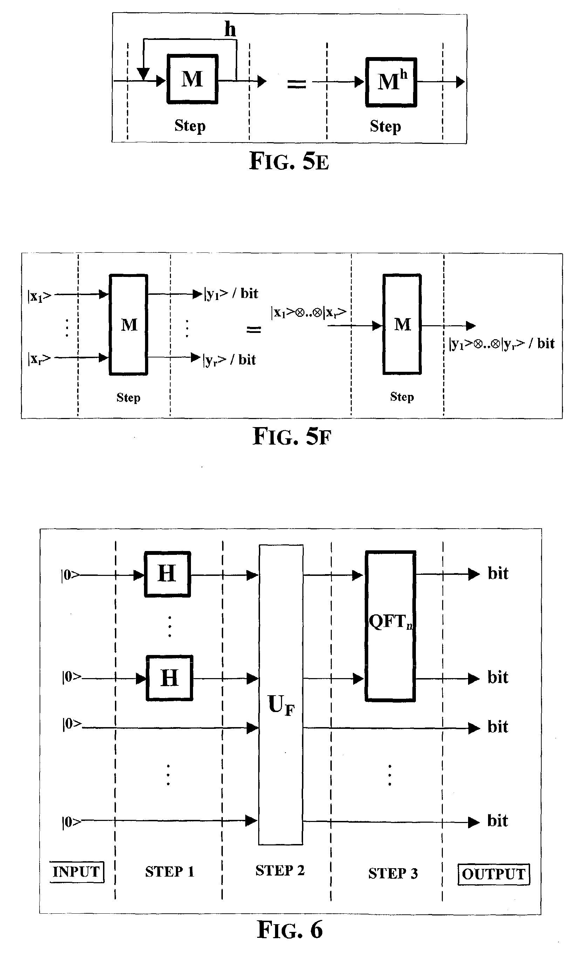

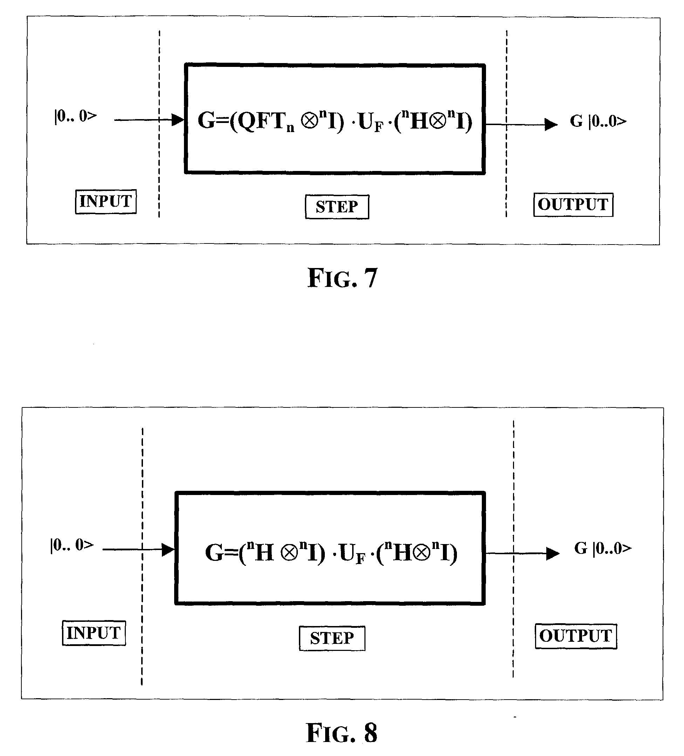

The Shor's quantum gate may be described with the quantum circuit of Figure 6.
Shor's quantum gate shown in Figure 7 is very similar to Simon's quantum gate shown in Figure 8, unless for the last operator.
In Simon's algorithm the operator $^nH$ is applied to the first $n$ vectors exiting from $U_F$. This operator of the Simon's algorithm is responsible of the annihilation of some cells in the first column of the final gate and this produces a special superposition of base vectors as output. By measuring this superposition it is possible to solve the Simon's problem.
In Shor's algorithm the interference operator is not $^nH$, in fact the main diagonal pattern of $U_F$ is different, and therefore a different interference operator is needed in order to extract the information. This operator is represented by the matrix $QFT_n$, called <u>Quantum Fourier Transform of order $n$</u>. This operator is non-classical because it maps a base vector into a complex linear combination of base vectors. In general, a base vector $|i>$ is mapped into the linear combination $\alpha_1 y_1 + ..+ \alpha_2 n y_2 n$ where $\alpha_i$ and $\alpha_{i+1}$ have the same absolute value $1/2^{n/2}$ but they are phase shifted of $i \cdot (2\pi/2^n)$ starting with $\alpha_1 = 1/2^{n/2}$. The operator is defined as follows:

Table 7

| $QFT_n$ | $\phi=0$<br>\|0..0> | $\phi=2\pi/2^n$<br>\|0..1> | ...<br>... | $\phi=(2^n\text{-}1)2\pi/2^n$<br>\|1..1> |
|---------|---------|---------|-----|---------|
| \|0..0> | $1/2^{n/2}$ | $1/2^{n/2}$ | ... | $1/2^{n/2}$ |
| \|0..1> | $1/2^{n/2}$ | $1/2^{n/2}e^{J2\pi/2n}$ | ... | $1/2^{n/2}e^{J(2n-1)2\pi/2n}$ |
| ... | ... | ... | ... | ... |
| \|1..1> | $1/2^{n/2}$ | $1/2^{n/2}e^{J(2n-1)2\pi/2n}$ | ... | $1/2^{n/2}e^{J(2n-1)2\ 2\pi/2n}$ |

where J is the imaginary unit. By using the transformation rules shown in Figures from 5a to 5f to the circuit of Figure 6, the quantum gate of Figure 7 is obtained.
A discussion of the form of these gates for few particular cases will follow and the observations will then be generalized.

## A. Introductory example

If $n=2$, the quantum gate has the following form:

$$G=(QFT_2\otimes{}^2I)\cdot U_F\cdot({}^2H\otimes{}^2I)$$

This gate is now calculated for the first considered example:

Table 8

| ${}^2H\otimes{}^2I$ | \|00> | \|01> | \|10> | \|11> |
|---|---|---|---|---|
| \|00> | ${}^2I/2$ | ${}^2I/2$ | ${}^2I/2$ | ${}^2I/2$ |
| \|01> | ${}^2I/2$ | $-{}^2I/2$ | ${}^2I/2$ | $-{}^2I/2$ |
| \|10> | ${}^2I/2$ | ${}^2I/2$ | $-{}^2I/2$ | $-{}^2I/2$ |
| \|11> | ${}^2I/2$ | $-{}^2I/2$ | $-{}^2I/2$ | ${}^2I/2$ |

The matrix $U_F$ has been already presented in Table 4, therefore

Table 9

| $U_F\cdot({}^2H\otimes{}^2I)$ | \|00> | \|01> | \|10> | \|11> |
|---|---|---|---|---|
| \|00> | $I\otimes C/2$ | $I\otimes C/2$ | $I\otimes C/2$ | $I\otimes C/2$ |
| \|01> | $C\otimes C/2$ | $-C\otimes C/2$ | $C\otimes C/2$ | $-C\otimes C/2$ |
| \|10> | $I\otimes C/2$ | $I\otimes C/2$ | $-I\otimes C/2$ | $-I\otimes C/2$ |
| \|11> | $C\otimes C/2$ | $-C\otimes C/2$ | $-C\otimes C/2$ | $C\otimes C/2$ |

If $n = 2$, $QFT_2$ is as follows:

Table 10

| $QFT_2$ | $\phi=0$ \|00> | $\phi=\pi/2$ \|01> | $\phi=\pi$ \|10> | $\phi=3\pi/2$ \|11> |
|---|---|---|---|---|
| \|00> | 1/2 | 1/2 | 1/2 | 1/2 |
| \|01> | 1/2 | J/2 | -1/2 | -J/2 |
| \|10> | 1/2 | -1/2 | 1/2 | -1/2 |
| \|11> | 1/2 | -J/2 | -1/2 | J/2 |

Table 11

| $QFT_2\otimes{}^2I$ | \|00> | \|01> | \|10> | \|11> |
|---|---|---|---|---|
| \|00> | ${}^2I/2$ | ${}^2I/2$ | ${}^2I/2$ | ${}^2I/2$ |
| \|01> | ${}^2I/2$ | $J\,{}^2I/2$ | $-{}^2I/2$ | $-J\,{}^2I/2$ |
| \|10> | ${}^2I/2$ | $-{}^2I/2$ | ${}^2I/2$ | $-{}^2I/2$ |
| \|11> | ${}^2I/2$ | $-J\,{}^2I/2$ | $-{}^2I/2$ | $J\,{}^2I/2$ |

The table defining the quantum gate $G$ is calculated as follows:

Table 12

| $G$ | \|00> | \|01> | \|10> | \|11> |
|---|---|---|---|---|
| \|00> | $(I\otimes C+C\otimes C)/2$ | $(I\otimes C-C\otimes C)/2$ | 0 | 0 |
| \|01> | 0 | 0 | $(I\otimes C+JC\otimes C)/2$ | $(I\otimes C-JC\otimes C)/2$ |
| \|10> | $(I\otimes C-C\otimes C)/2$ | $(I\otimes C+C\otimes C)/2$ | 0 | 0 |
| \|11> | 0 | 0 | $(I\otimes C-JC\otimes C)/2$ | $(I\otimes C+JC\otimes C)/2$ |

By applying the operator $G$ to the vector \|0000> the following is obtained:

$$G|0000\rangle=|00\rangle\,\frac{1}{2}\,(I\otimes C+C\otimes C)|00\rangle+|10\rangle\,\frac{1}{2}\,(I\otimes C-C\otimes C)|00\rangle$$

If a measurement of this vector is made and the first two vectors of dimension 2 are encoded back into their binary labels, the possible results are:

00 with probability 0.5
10 with probability 0.5

The distance between these values is $d=[|10-00|]_{10}=[10]_{10}=2$, where $[s]_{10}$ is the decimal representation of the binary string $s$. It should be observed that $N/r=4/2=2$, therefore $d=N/r$. If $r$ is unknown, it may be calculated it as:

$$r=N/d$$

*B. Case with n=2, r=2*

As shown above, when $n=2$, the quantum gate has the following form:

$$G=(QFT_2\otimes^2I)\cdot U_F\cdot(^2H\otimes^2I)$$

by using the matrices calculated in the introductory example and recalling $U_F$ given by Table 5.

Table 13

| $U_F\cdot(^2H\otimes^2I)$ | \|00> | \|01> | \|10> | \|11> |
|---|---|---|---|---|
| \|00> | $M_{00}/2$ | $M_{00}/2$ | $M_{00}/2$ | $M_{00}/2$ |
| \|01> | $Mol/2$ | $-M_{01}/2$ | $M_{01}/2$ | $-M_{01}/2$ |
| \|10> | $M_{10}/2$ | $M_{10}/2$ | $-M_{10}/2$ | $-M_{10}/2$ |
| \|11> | $M_{11}/2$ | $-M_{11}/2$ | $-M_{11}/2$ | $M_{11}/2$ |

By recalling the expression of the interference operator $QFT_2\otimes^2I$ shown in Table 11, the following generalized form of G is obtained:

Table 14

| $G$ | \|00> | \|01> | \|10> | \|11> |
|---|---|---|---|---|
| \|00> | $(M_{00}+M_{01}+M_{10}+M_{11})/4$ | $(M_{00}-M_{01}+M_{10}-M_{11})/4$ | $(M_{00}+M_{01}-M_{10}-M_{11})/4$ | $(M_{00}-M_{01}-M_{10}+M_{11})/4$ |
| \|01> | $(M_{00}+JM_{01}-M_{10}-JM_{11})/4$ | $(M_{00}-JM_{01}-M_{10}+JM_{11})/4$ | $(M_{00}+JM_{01}+M_{10}+JM_{11})/4$ | $(M_{00}-JM_{01}+M_{10}-JM_{11})/4$ |
| \|10> | $(M_{00}-M_{01}+M_{10}-M_{11})/4$ | $(M_{00}+M_{01}+M_{10}+M_{11})/4$ | $(M_{00}-M_{01}-M_{10}+M_{11})/4$ | $(M_{00}+M_{01}-M_{10}-M_{11})/4$ |
| \|11> | $(M_{00}-JM_{01}-M_{10}+JM_{11})/4$ | $(M_{00}+JM_{01}-M_{10}-JM_{11})/4$ | $(M_{00}-JM_{01}+M_{10}-JM_{11})/4$ | $(M_{00}+JM_{01}+M_{10}+JM_{11})/4$ |

If $r=2$, like in our introductory example, then $M_{00}=M_{10}\neq M_{01}=M_{11}$. This means:

Table 15

| $G$ | \|00> | \|01> | \|10> | \|11> |
|---|---|---|---|---|
| \|00> | $(M_{00}+M_{01})/2$ | $(M_{00}-M_{01})/2$ | 0 | 0 |
| \|01> | 0 | 0 | $(M_{00}+JM_{01})/2$ | $(M_{00}-JM_{01})/2$ |
| \|10> | $(M_{00}-M_{01})/2$ | $(M_{00}+M_{01})/2$ | 0 | 0 |
| \|11> | 0 | 0 | $(M_{00}-JM_{01})/2$ | $(M_{00}+JM_{01})/2$ |

Consider the application of $G$ to vector \|0000>:

$$G|0000\rangle = |00\rangle \frac{1}{2} (M_{00} + M_{01})|00\rangle + |10\rangle \frac{1}{2} (M_{00} - M_{01})|00\rangle$$

If a measurement is done on this vector and the first two vectors of dimension 2 are encoded back into their binary labels, then the possible results are:

00 with probability 0.5

10 with probability 0.5

These are the same results that were obtained for our introductory example and the same conclusions hold.

*C. General case*

As already shown, for a general case, the operator $U_F$ is defined as in Table 6. The quantum gate G will how be calculated for a general situation:

Table 16

| $^nH \otimes ^nI$ | $\|0..0\rangle$ | ... | $\|j\rangle$ | ... | $\|1..1\rangle$ |
|---|---|---|---|---|---|
| $\|0..0\rangle$ | $^nI/2^{n/2}$ | ... | $^nI/2^{n/2}$ | ... | $^nI/2^{n/2}$ |
| $\|0..1\rangle$ | $^nI/2^{n/2}$ | ... | $(-1)^{(0..1)\cdot j}(^nI/2^{n/2})$ | ... | $-^nI/2^{n/2}$ |
| ... | ... | ... | ... | ... | ... |
| $\|i\rangle$ | $^nI/2^{n/2}$ | ... | $(-1)^{i \cdot j}(^nI/2^{n/2})$ | ... | $(-1)^{i \cdot (1..1)}(^nI/2^{n/2})$ |
| ... | ... | ... | ... | ... | ... |
| $\|1..1\rangle$ | $^nI/2^{n/2}$ | ... | $(-1)^{(1..1)\cdot j}(^nI/2^{n/2})$ | ... | $(-1)^{(1..1)\cdot(1..1)}(^nI/2^{n/2})$ |

Table 17

| $U_F \cdot (^nH \otimes ^nI)$ | $\|0..0\rangle$ | ... | $\|j\rangle$ | ... | $\|1..1\rangle$ |
|---|---|---|---|---|---|
| $\|0..0\rangle$ | $M_{0..0}/2^{n/2}$ | ... | $M_{0..0}/2^{n/2}$ | ... | $M_{0..0}/2^{n/2}$ |
| ... | ... | ... | ... | ... | ... |
| $\|i\rangle$ | $M_i/2^{n/2}$ | ... | $(-1)^{i \cdot j} M_i/2^{n/2}$ | ... | $(-1)^{i \cdot (1..1)} M_i/2^{n/2}$ |
| ... | ... | ... | ... | ... | ... |
| $\|1..1\rangle$ | $M_{1..1}/2^{n/2}$ | ... | $(-1)^{(1..1)\cdot j} M_{1..1}/2^{n/2}$ | ... | $(-1)^{(1..1)\cdot(1..1)} M_{1..1}/2^{n/2}$ |

Observe that:

$$[QFT]_{i,j} = \frac{1}{2^{n/2}} e^{J[i]_{10} \cdot \frac{[j]_{10} \cdot 2\pi}{2^n}}$$

where $[i]_{10}$ and $[j]_{10}$ are the decimal representations of the binary strings $i$ and $j$. Therefore:

Table 18

| $QFT_n \otimes ^nI$ | $\|0..0\rangle$ | ... | $\|j\rangle$ | ... | $\|1..1\rangle$ |
|---|---|---|---|---|---|
| $\|0..0\rangle$ | $^nI/2^{n/2}$ | ... | $^nI/2^{n/2}$ | ... | $^nI/2^{n/2}$ |
| ... | ... | ... | ... | ... | ... |
| $\|i\rangle$ | $^nI/2^{n/2}$ | ... | $^nI/2^{n/2}e^{J[i]_{10} \cdot [j]_{10} 2^{2\pi/2n}}$ | ... | $^nI/2^{n/2} e^{J[i]_{10} \cdot (2n-1)2\pi/2n}$ |
| ... | ... | ... | ... | ... | ... |
| $\|1..1\rangle$ | $^nI/2^{n/2}$ | ... | $^nI/2^{n/2}e^{J(2n-1)\cdot [j]_{10} 2^{2\pi/2n}}$ | ... | $^nI/2^{n/2} e^{J(2n-1)2 2\pi/2n}$ |

The quantum gate G has the following form:

Table 19

| $G$ | $\lvert 0..0\rangle$ | ... |
|---|---|---|
| $\lvert 0..0\rangle$ | $1/2^n\Sigma_{k\in\{0,1\}}ne^{J\pi\cdot 0\cdot[k]}10^{/2n-1})M_k$ | ... |
| ... | ... | ... |
| $\lvert i\rangle$ | $1/2^n\Sigma_{k\in\{0,1\}}ne^{J\pi\cdot[i]}10^{\cdot[k]}10^{/2n-1}M_k$ | ... |
| ... | ... | ... |
| $\lvert 1..1\rangle$ | $1/2^n\Sigma_{k\in\{0,1\}}ne^{J\pi\cdot(2n-1)\cdot[k]}10^{/2n-1}M_k$ | ... |

Consider the term:

$$1/2^n\Sigma_{k\in\{0,1\}}n\,e^{J\pi\cdot[i]}10^{\cdot[k]}10^{/2^{n-1}}M_k$$

Since $M_i = P_1\otimes..\otimes P_n$, $P_k\in\{I, C\}$, $k=1,..,n$ and $M_i = M_j \Leftrightarrow ((j=i)\mathrm{OR}(j=(i+r)\mathrm{mod}N))$ this term may be written as:

$$1/2^n_{h\in R}\,[e^{J\pi\cdot[i]_{10}\cdot[h]_{10}/2^{n-1}} + e^{J\pi\cdot[i]_{10}\cdot([h]_{10}+1r)/2^{n-1}} + .. + e^{J\pi\cdot[i]_{10}\cdot([h]_{10}+(l_k-1)r)/2^{n-1}}]\,M_h$$

or:

$$1/2^n\Sigma_{h\in R}(-1)^{[h]_{10}[i]_{10}/2^{n-1}}[(-1)^{0r[i]_{10}/2^{n-1}} + (-1)^{1r[i]_{10}/2^{n-1}} + .. +(-1)^{(l_h-1)r[i]_{10}/2^{n-1}}]M_h$$

where $R=\{0..0,0..1, .., [r-1]_2\}$. Suppose that $N$ be a multiple of $r$, then $l_h=2^n/r=l$ for every $h$. Therefore, the previous term can be transformed into:

$$1/2^n\Sigma_{h\in R}(-1)^{[h]_{10}[i]_{10}/2^{n-1}}[(-1)^{2\cdot 0\cdot[i]_{10}/l} + (-1)^{2\cdot 1\cdot[i]_{10}/l} + .. + (-1)^{2\cdot(l-1)\cdot[i]_{10}/l}]M_h$$

and finally:

$$1/2^n\Sigma_{h\in R}(-1)^{[h]_{10}[i]_{10}/2^{n-1}}[e^{J\cdot 0\cdot(2\pi[i]_{10}/l)} + e^{J\cdot 1\cdot(2\pi[i]_{10}/l)} + .. + e^{J\cdot(l-1)(2\pi[i]_{10}/l)}]M_h$$

The term:

$$e^{J\cdot 0\cdot(2\pi[i]_{10}/l)} + e^{J\cdot 1\cdot(2\pi[i]_{10}/l)} + .. + e^{J\cdot(l\_1)\cdot(2\pi[i]_{10}/l)}$$

is the summation of the $l$ roots of order $l$ of the unity, unless $i$ is a multiple of $l$. The summation of the roots of a given order of the unity is always null.

Therefore in the first column of $G$, only those cells whose row label is $\lvert i\rangle$ with $i$ multiple of $l$ are non-null. This means that by applying $G$ to vector $\lvert 0..0\rangle$, measuring the result and encoding back into their binary values the first $n$ base vectors of dimension 2 in the resulting tensor product, only strings $i$, such that $i=m*l$ for some integer $m$ are obtained. This means: $i\equiv 0\mathrm{mod}l$.

### Decoder

As for Simon's algorithm, the quantum block, is repeated several times in order to build a collection of vectors $\lvert i\rangle$ such that $i\equiv 0\mathrm{mod}l$. By putting these equations in a system and solving it, the value of $l$ is obtained. Because $l=2^n/$

$r$, $r=2^n/l$ is calculated.

The number of vectors necessary for calculating $r$ depends on the technique used for solving the system of equations. In general, it is necessary to repeat the quantum block for a number of times that increases according to a polynomial rule with $n$.

If $2^n$ is not a multiple of $r$, then $l_h=[2^n/r]$, for some values of $h$, and $l_h=[2^n/r]+1$, for some other values of $h$. The term

$$e^{J\cdot 0(2\pi[i]_{10}/l_h)} + e^{J\cdot 1(2\pi[i]_{10}/l_h)} + .. + e^{J\cdot(l_h-1)(2\pi[i]_{10}/l_h)}$$

is not exactly 0 when $i$ is not a multiple of $l_h$, although it approximates 0. Therefore, all possible strings may be found as result of measurement, but strings $i$ that do not represent a multiple of $2^n/r$ are less likely to be found. In order to decrease this probability (and increase the probability of $2^n/r$-multiples), $2n$ input bits are employed for encoding $f$. This means that more roots of the unity are involved and thus a better approximation is reached.

According to classic approaches, it is evident that the number of qubits (quantum bits) of a quantum algorithm may be a critical parameter that limits noticeably the calculation speed. In fact, by referring to the scheme of Figure 6, it may be noticed that by adding only one qubit, the size of matrices in respect to the previous configuration is doubled and the number of multiplications to be performed grows exponentially. This fact limits the possibility of practically employing the Shor's and Simon's algorithms when the number n of qubits is relatively large.

OBJECT AND SUMMARY OF THE INVENTION

It has now been found and is the object of this invention a faster method for performing Simon's or Shor's quantum algorithms.

Differently from known methods, according to the method of this invention, the superposition matrix operator is not generated and row-columns products are not carried out because only the indices of the non null components of vectors generated by the superposition operation are calculated. In so doing, only vectors of $2^n$ components need to be calculated and stored, with a remarkable saving in terms of computational complexity, time and memory space.

More precisely, an object of this invention is a method for performing a Simon's or Shor's quantum algorithm over a certain function $f(x)$ encoded with a certain number $n$ of qubits, that comprises:

- carrying out a superposition operation over a set of input vectors, generating a superposition vector,
- carrying out an entanglement operation, generating a corresponding entanglement vector,
- carrying out an interference operation, generating a corresponding output vector.

The method of this invention carries out the superposition operation in a comparably very fast manner because it generates the superposition vector by identifying only the non null components thereof by calculating, in function of said number $n$ of qubits, the value $1/2^{n/2}$ of the non null components of the superposition vector, and by calculating the indices of these components according to an arithmetical succession the seed of which is 1 and the common difference is $2^n$.

According to a preferred embodiment, similar operations are performed also for simplifying the entanglement operation.

The method of this invention is implemented in a relative quantum gate that comprises:

- a superposition subsystem carrying out a superposition operation according to a Simon's or Shor's quantum algorithm over a set of input vectors, outputting a superposition vector;
- an entanglement subsystem processing components of the superposition vector, outputting a corresponding entanglement vector; and
- an interference subsystem processing components of the entanglement vector, generating a corresponding output vector.

A characterizing feature of the quantum gate of this invention consists in that the superposition subsystem comprises

- a circuit generating a first bit string representing the value $1/2^{n/2}$ of the non null components of the superposition vector and other $2^n$ bit-strings each representing a respective index of the $2^n$ non null components of the superposition vector, and
- a memory buffer storing the strings representing the value $1/2^{n/2}$ and said indices.

The invention is more precisely defined in the annexed claims.

BRIEF DESCRIPTION OF THE DRAWINGS

The various aspects and advantages of the invention will become even more evident through a detailed description referring to the attached drawings, wherein:

**Figure 1** is a block diagram of quantum algorithms;
**Figure 2** is a block diagram of an Encoder;
**Figure 3** is a general structure of the Quantum Block in Figure 1;
**Figure 4** is a circuit for a Deutsch-Jozsa's quantum gate;
**Figure 5a** shows an example of tensor product transformation;
**Figure 5b** shows an example of dot product transformation;
**Figure 5c** shows the identity transformation;
**Figure 5d** shows an example of propagation rule;
**Figure 5e** shows an example of iteration rule;
**Figure 5f** explains the input/output tensor rule;
**Figure 6** illustrates the Shor's quantum algorithm;
**Figure 7** illustrates the Shor's quantum gate;
**Figure 8** illustrates the Simon's quantum gate.

DESCRIPTION OF THE INVENTION

Both for the Shor's algorithm as well as for the Simon's algorithm, the superposition block is $^nH{\otimes}^nI$. This implies that the first n qubits of the input vector must be multiplied for $^nH$ and the second $n$ qubits must be multiplied for $^nI$.

In order to better illustrate how, according to this invention, the superposition operation may be greatly simplified, consider the following example with $n=3$. The first 3 qubits of the vector $P$ generated by the superposition operator are given by:

$$H|0\rangle{\otimes}H|0\rangle{\otimes}H|0\rangle$$

Neglecting the constant $1/2^{3/2}$ ($n=3$), this tensor product is:

$$\begin{bmatrix}1\\1\end{bmatrix}\otimes\begin{bmatrix}1\\1\end{bmatrix}\otimes\begin{bmatrix}1\\1\end{bmatrix}=\begin{bmatrix}1&1&1&1&1&1&1&1\end{bmatrix}^T$$

In general the vector $P$ obtained with the superposition operation is

$$P = \lfloor\ p_1\ p_2\ \cdots\ p_{2n}\rfloor$$

wherein $p_i = 1/2^{n/2}$.

For the considered example with $n=3$, this vector $P$ is

$$P = \frac{1}{2^{3/2}}\cdot[1\ 1\ 1\ 1\ 1\ 1\ 1\ 1]^T \otimes [1\ 0\ 0\ 0\ 0\ 0\ 0\ 0]^T$$

In the general case (any value of $n$) the components $p_i$ of the vector $P$ obtained with the superposition operation according to the Shor's or Simon's algorithm are:

$$p_i = \begin{cases} \dfrac{1}{2^{n/2}} & \text{if } i = 1 + 2^n(j-1) \\ 0 & \text{otherwise} \end{cases} \qquad (6)$$

wherein $j = 1...2^n$, $i = 1...2^{2n}$.

The components of the superposition vector may assume only two values, only $2^n$ of which are non null and must be stored.

The great advantage in respect to the known methods consists in that it is no longer necessary to store the whole superpositon operator $^nH\otimes^nI$, which has $2^{2n} \times 2^{2n}$ components, and performing row-columns products, but it is possible instead to store only the positions of the $2^n$ non null components of the superposition vector. The non null value of these components is $1/2^{n/2}$ and may be calculated immediately by knowing the number n of qubits.

According to the method of this invention, the superposition vector $P$ is not calculated carrying out $2^{2n}$ row-column products, as in the known methods, but is determined simply by calculating the positions of the $2^n$ non null components, the value of which is $1/2^{n/2}$.

These indices may be easily calculated, for instance in the form of bit strings with a CPLD (Complex Programmable Logic Device), by simply providing the number $n$ of qubits.

According to a preferred embodiment of this invention the entanglement operation is also rendered less complex from a computational point of view than in the known methods.

It has been noticed that in all quantum algorithms, the entanglement matrix $U_F$ is a diagonal block matrix the structure of which is strictly tied to the binary representation of the function $f$. The diagonal matrix blocks are chosen from the set constituted by the identity matrix $I$, the complement matrix $C$ and matrices obtained as tensor products thereof.

For instance, for the Shor's algorithm, with $n=2$, the diagonal matrix blocks of the matrix $U_F$ are chosen from the set composed of

$$I \otimes I,\ I \otimes C,\ C \otimes I,\ C \otimes C$$

each having a size $2^2 \times 2^2$. these matrix blocks may be immediately obtained from Table 1 noticing that, if the value 00 corresponds to a certain vector $(x_0, x_1)$, then the matrix block on the diagonal of $U_F$ in correspondence of the row $|x_0, x_1\rangle$ is $I \otimes I$. Similarly, when $f(x_0, x_1)$ is equal to 01, or 10 or 11, the matrix block on the diagonal of $U_F$ in correspondence of the row $|x_0,x_1\rangle$ is respectively equal to $I \otimes C$, $C \otimes I$, $C \otimes C$. This rule is resumed in the following table:

Table 20

| $f(x_0, x_1) = 00$ | $f(x_0, x_1) = 01$ | $f(x_0, x_1) = 10$ | $f(x_0, x_1) = 11$ |
|---|---|---|---|
| $I\otimes I$ | $I\otimes C$ | $C\otimes I$ | $C\otimes C$ |

In general, when this bit-string is known

$$f(x_0, ..., x_{n-1}) = (z_0, ..., z_{m-1})$$

it is possible to recognize immediately that the matrix block on the main diagonal (up-left to down-right) of $U_F$ in correspondence of the row $|x_0, \cdots, x_{n-1}\rangle$ is:

$$(z_0 \cdot C + (1-z_0) \cdot I) \otimes \cdots \otimes (z_{m-1} \cdot C + (1-z_{m-1}) \cdot I)$$

This simple rule may be easily verified and it holds for all quantum algorithms. It allows to calculate quickly the non null $2^n$ matrix blocks of $U_F$, each having $2^n \times 2^n$ components.

By knowing the non null matrix blocks of the matrix $U_F$, it is possible to quickly calculate the vector $A$ obtained with the entanglement operation, recalling that only a component per each row and per each column of the matrix $U_F$ is non null.

According to a preferred embodiment of the method of this invention it is possible to calculate immediately the components $a_k$ of the entanglement vector $A$ without calculating any product.

More in detail, it has been observed that only the first row of each $2^n \times 2^n$ matrix block of the entanglement operator $U_F$ gives a non null result, because the non null components of the superposition vector $P$ of Shor's and Simon's algorithms are given by eq. (6). As a consequence it is even possible to calculate the components $a_k$ of the entanglement vector $A$ by directly using the following formula

$$a_k = \begin{cases} \dfrac{1}{2^{n/2}} & \text{if } k = f(j) + 1 + 2^n (j-1) \\ 0 & \text{otherwise} \end{cases} \tag{7}$$

wherein $j = 1...2^n$, $k = 1...2^{2n}$.

The result is a vector the components of which are null or assume a same non null value that depends only on the number $n$ of qubits.

As for the superposition vector, also in this case there are only $2^n$ non null components having the same value, thus the entanglement vector may be determined by the indices of the $2^n$ non null components.

Therefore, also the entanglement operation, as well as the superposition operation, may be carried out with a circuit that generates bit-strings that represent these indices and a memory buffer in which to store these strings.

It is much more difficult to perform the interference operation of the Shor's algorithm. In fact, differently from the entanglement operation, the vector components are not composed exclusively by two values. Moreover the presence of tensor products, the number of which grows rapidly with n, constitutes a critical computational problem.

In order to simplify the input-output relations, certain particular properties of the matrix $QFT_n \otimes^n I$ have been considered.

Differently from other quantum algorithms, the interference operation in the Shor's algorithm is performed through a quantum Fourier transformation $QFT$. As all quantum operators, the $QFT$ operator is a unary operator acting on complex vectors of the Hilbert space. It transforms each input vector in a superposition of base vectors of the same amplitude, but with a phase shift.

The interference matrix $QFT_n \otimes^n I$ has only few non null components. It has $2^n \cdot (2^n - 1)$ zeroes in each column. As a consequence, it is not necessary to perform all multiplications because many of them give a null result.

Being $b_h$ the components of the vector $B$ generated with the interference operation, the real part and the imaginary part of $b_h$ are given by the following equations:

$$\text{Re}[b_h] = \sum_{j=1}^{2^n} a_{(h \bmod 2^n) + 1 + 2^n (j-1)} \cos\left( 2\pi \frac{(j-1) \cdot \text{int}[(h-1)/2^n]}{2^n} \right)$$

$$\text{Im}[b_h] = \sum_{j=1}^{2^n} a_{(h \bmod 2^n) + 1 + 2^n (j-1)} \sin\left( 2\pi \frac{(j-1) \cdot \text{int}[(h-1)/2^n]}{2^n} \right)$$

being int[.] the function that generates the integer part of its argument and being $h = 1..2^{2n}$.

Therefore, according to the improved method of this invention, each component is calculated simply by performing a summation of at most $2^n$ cosine (or sine) functions and multiplying this summation for $1/2^{n/2}$, because the non null components of the entanglement vector $A$ are equal to $1/2^{n/2}$.

The improvement in respect to the known method is evident, because they contemplate the step of calculating the real and imaginary parts of the components of the output vector by performing a summation of $2^{2n}$ products, thus with a remarkably greater computational complexity.

**Claims**

**1.** A method of performing a Simon's or a Shor's quantum algorithm on a given function ($f(x)$) encoded with a certain number $n$ of qubits, comprising the steps of

carrying out a superposition operation according to one of said quantum algorithms over a set of input vectors, generating a superposition vector ($P$),

carrying out an entanglement operation ($U_F$) on said superposition vector ($P$), generating a corresponding entanglement vector (*A*),

carrying out an interference operation on said entanglement vector (A), generating a corresponding output vector (B), and

**characterized in that**

said superposition vector (P) is generated through the following process steps:

calculating, in function of said number *n* of qubits, the value $(1/2^{n/2})$ of non null components of said superposition vector (*P*);

calculating indices (*i*) of the $2^n$ non null components of said superposition vector as an arithmetical succession, the seed of which is 1 and the common difference of which is

$$2^n \ ( \ i = 1 + 2^n (j-1) ).$$

2. The method of claim 1, wherein said entanglement vector is generated through the following process steps:

calculating indices (*k*) of the $2^n$ non null components of said entanglement vector (*A*), summing to each term of said arithmetical succession a relative number corresponding to the value of the given function (*f(j)*) calculated in correspondence of the number of place (*j*) of said term in said succession ( $k = f(j) + 1 + 2^n(j-1)$ );

the value of the non null components of said entanglement vector (*A*) being equal to that of the superposition vector (*P*).

3. The method of claim 2 for carrying out a Shor's quantum algorithm, comprising the operation of generating real and imaginary components (Re[$b_h$], Im[$b_h$]) of said output vector (*B*) through the following process steps:

for each index *h* of said real and imaginary components (Re[$b_h$], Im[$b_h$]), veryfying whether among the terms of the arithmetic succession

$$h \bmod 2^n + 1 + 2^n(j\text{-}1)$$

of seed $h \bmod 2^n + 1$, index *j* and common difference $2^n$, there is at least a term corresponding to an index of a non null component of said entanglement vector;

if the above test is negative, making said real and imaginary components (Re[$b_h$], Im[$b_h$]) equal to zero, otherwise calculating said real component (Re[$b_h$]) as the product between said value of the non null components and the summation of the following cosine functions

$$\cos\left( 2\pi \frac{(j-1)\cdot \mathrm{int}[(h-1)/2^n]}{2^n} \right)$$

and said imaginary component (Im[$b_h$]) as the product between said value of the non null components and the summation of the following sine functions

$$\sin\left( 2\pi \frac{(j-1)\cdot \mathrm{int}[(h-1)/2^n]}{2^n} \right)$$

for all values of said index *j* of said arithmetical succession to which correspond indices (*k*) of non null components of said entanglement vector.

4. A quantum gate for performing a Simon's or a Shor's quantum algorithm on a given function (*f(x)*) encoded with a certain number *n* of qubits according to the method of claim 1, comprising

a superposition subsystem carrying out a superposition operation according to one of said quantum algorithms over a set of input vectors, generating a superposition vector (P),

an entanglement subsystem processing said superposition vector (P), generating a corresponding entanglement vector (A),

an interference subsystem processing said entanglement vector (A), generating a corresponding output vector (B), and

**characterized in that**

said superposition subsystem comprises a circuit generating a first bit string representing said value $(1/2^{n/2})$ of non null components of said superposition vector (P) and other $2^n$ bit-strings each representing a respective index (i) of the $2^n$ non null components of said superposition vector;

a memory buffer storing the strings representing said value $(1/2^{n/2})$ and said indices (i).

5. The quantum gate of claim 4, implementing the method of claim 2, wherein said entanglement subsystem comprises

a circuit generating bit-strings representing said indices (k) of the $2^n$ non null components of said entanglement vector (A);

a second memory buffer storing said bit strings (k).

**FIG. 1**

**FIG. 2**

**FIG. 3**

**FIG. 4**

FIG. 5A

FIG. 5B

FIG. 5C

FIG. 5D

**FIG. 5E**

**FIG. 5F**

**FIG. 6**

$$|0..0\rangle \rightarrow \boxed{G=(QFT_n \otimes^n I) \cdot U_F \cdot (^n H \otimes^n I)} \rightarrow G|0..0\rangle$$

INPUT    STEP    OUTPUT

FIG. 7

$$|0..0\rangle \rightarrow \boxed{G=(^n H \otimes^n I) \cdot U_F \cdot (^n H \otimes^n I)} \rightarrow G|0..0\rangle$$

INPUT    STEP    OUTPUT

FIG. 8